# FASCICULE DE BREVET EUROPEEN

(11) **EP 2 927 134 B1**
(45) Date de publication et mention de la délivrance du brevet: **27.04.2016**
(21) Numéro de dépôt: 15160334.7
(22) Date de dépôt: 23.03.2015
(51) Int. Cl.: B65B 25/00, A21D 10/02, B65B 63/04, B65D 85/36, B65D 85/671

(54) **PROCÉDÉ DE CONDITIONNEMENT D'UNE PÂTE ÉTALÉE**
VERPACKUNGSVERFAHREN FÜR AUSGEROLLTEN TEIG
METHOD FOR CONDITIONING SHEETED DOUGH

(30) Priorité: 03.04.2014 FR 1452982
(43) Date de publication de la demande: 07.10.2015
(73) Titulaire: Cerelia, 62800 Lievin (FR)
(72) Inventeur: Potez, Fanny, 62136 Lestrem (FR); Coquille, Grégory, 06130 Grasse (FR)
(74) Mandataire: Laget, Jean-Loup

(56) Documents cités:
- EP-A1- 0 158 590
- WO-A1-84/04081
- DE-U1- 9 205 373
- GB-A- 941 153
- US-A- 2 726 156

## Description

L'invention concerne un procédé de conditionnement d'une pâte étalée, prête à l'emploi.

Le document GB 941 153 décrit un procédé de conditionnement d'une pâte de pâtisserie, étalée sur une bande de papier, et enroulée sur elle-même. Pour éviter, en début d'enroulement, que la pâte ne se colle sur elle-même, l'extrémité de la bande de papier est repliée à plat sur la pâte avant enroulement.

Le document FR 2 561 499 décrit une pâte étendue au rouleau, placée sur une feuille de séparation, et enroulée sur elle-même avec la feuille de séparation. La pâte enroulée est placée dans un sachet et dans un emballage empilable à section triangulaire ou rectangulaire.

Le document EP 0 158 590 décrit un procédé de conditionnement d'une pâte étalée sur une feuille d'enrobage consistant à recouvrir la pâte avec un volet libre de la feuille et à enrouler sur elle-même la pâte enrobée pour constituer un rouleau.

Dans tous les cas, la pâte est enroulée et emballée sans être repliée. La longueur de l'emballage correspond à la plus petite des dimensions de la pâte, c'est-à-dire au diamètre pour la pâte circulaire, ou à la largeur pour la pâte rectangulaire. Usuellement, la longueur de l'emballage est comprise entre 36 et 40 cm.

Cette longueur est difficile à loger dans les présentoirs des magasins et dans les réfrigérateurs, et elle constitue un facteur de fragilisation dans les transports domestiques.

L'un des buts de l'invention est de proposer un procédé de conditionnement d'une pâte étalée qui ne présente pas les inconvénients précités.

Un autre but de l'invention est de proposer un procédé de conditionnement d'une pâte étalée, qui aboutisse à un emballage plus facile à transporter, à présenter et à conserver au froid.

L'invention a pour objet un procédé de conditionnement d'une pâte étalée, comportant les étapes de :
a) Prendre une pâte étalée présentant une première et une deuxième dimensions médianes,
b) Prendre une feuille rectangulaire d'enrobage, ayant une première dimension correspondant sensiblement à la première dimension médiane de la pâte étalée, et une deuxième dimension correspondant sensiblement à une fois et demie la deuxième dimension de la pâte étalée,
c) Placer la pâte étalée sur la feuille rectangulaire à proximité de trois bords de la feuille,
d) Replier sur la pâte étalée le volet libre de la feuille non couvert par la pâte, ledit volet libre de la feuille couvrant sensiblement la moitié de la surface de la pâte,
e) Replier la pâte en deux en prenant comme ligne de pliage le bord libre du volet,
f) Enrouler la pâte sur elle-même pour constituer un rouleau de longueur sensiblement égale à la moitié de ladite deuxième dimension médiane de la pâte étalée.

Selon un mode de réalisation, le procédé comprend les étapes complémentaires de :
g) Placer le rouleau dans un sac,
h) Placer le rouleau ensaché dans un emballage de présentation.

Selon un autre mode de réalisation, le procédé comprend les étapes complémentaires de :
i) Placer le rouleau dans une cartonnette,
j) Placer la cartonnette contenant le rouleau, dans un sac.

Selon un autre mode de réalisation, le procédé comprend les étapes complémentaires de :
k) Placer le rouleau dans une coque de barquette thermoformée,
l) Sceller la barquette.

De manière avantageuse, la pâte étalée est de forme circulaire.

Avantageusement, la pâte étalée est de forme rectangulaire.

D'autres caractéristiques, détails et avantages de l'invention ressortent de la description qui suit faite avec référence aux dessins annexés dans lesquels :
- La figure 1 est une vue de la pâte étalée et de la feuille d'enrobage dans leur disposition relative initiale ;
- La figure 2 est une vue de la pâte étalée, après rabat du volet libre de la feuille ;
- La figure 3 est une vue de la pâte et de la feuille après pliage ;
- La figure 4 est une vue de la pâte et de la feuille en cours d'enroulement ;
- La figure 5 est une vue de la pâte enroulée et ensachée ;
- La figure 6 est une vue de l'emballage fermé contenant la pâte ensachée ;
- La figure 7 est une vue en coupe transversale du rouleau de pâte disposé dans une cartonnette ;
- La figure 8 est une vue en coupe transversale du rouleau de pâte disposé dans une barquette thermoformée.

Dans l'exemple de réalisation décrit, la pâte étalée est de forme circulaire, mais le procédé de conditionnement s'applique aussi au cas d'une pâte de forme rectangulaire, où les deux dimensions médianes sont différentes.

Une pâte étalée 1 présente une première dimension médiane 2 et une deuxième dimension médiane 3.

Une feuille d'enrobage rectangulaire 4 est découpée, avec une première dimension médiane 5 et une deuxième dimension médiane 6. La première dimension médiane 5 de la feuille 4 correspond à la première dimension médiane 2 de la pâte. La deuxième dimension médiane 6 de la feuille correspond à une fois et demie la deuxième dimension médiane 3 de la pâte. La pâte 1 est placée sur la feuille 4 à proximité de trois bords de la feuille 4.

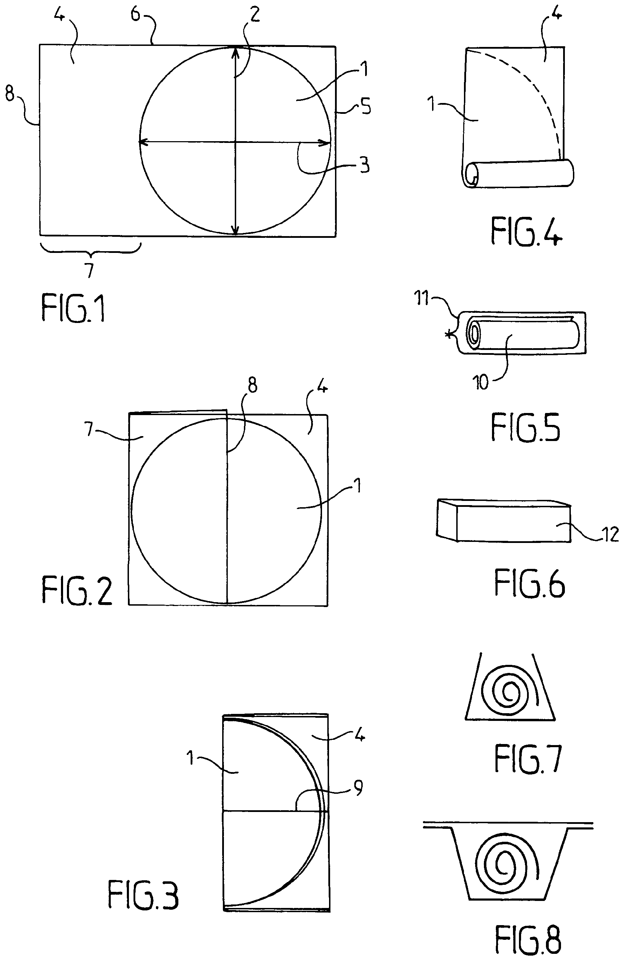

De cette façon, la feuille 4 présente un volet libre 7 dont la largeur correspond sensiblement à la moitié de la deuxième dimension médiane 3 de la pâte 1 (figure 1).

Le volet 7 de la feuille 4, non couvert par la pâte 1, est replié sur la pâte 1 en couvrant sensiblement la moitié de la surface de la pâte 1 (figure 2). Le bord libre 8 du volet 7 est sensiblement superposé à la première dimension médiane 2 de la pâte 1. En prenant comme ligne de pliage le bord libre 8 du volet 7, la pâte 1 est repliée en deux (figure 3). Au cours de cette opération, le volet 7 se trouve placé entre les deux moitiés de la pâte 1. Ainsi les deux moitiés de la pâte 1 ne sont pas en contact direct, et les deux moitiés de la pâte 1 sont recouvertes extérieurement par la feuille 4. L'ensemble ainsi constitué présente une dimension longitudinale égale à la première dimension médiane 5 de la feuille 4, qui correspond à la première dimension médiane 2 de la pâte, et une dimension transversale 9 qui correspond à la moitié de la deuxième dimension médiane 3 de la pâte 1.

La pâte 1, recouverte par la feuille 4 et repliée en deux, est alors enroulée sur elle-même pour constituer un rouleau dont la longueur correspond à la dimension transversale 9, c'est-à-dire est sensiblement égale à la moitié de la deuxième dimension médiane 3 de la pâte 1 (figure 4).

Lorsque la pâte est entièrement enroulée, elle se présente sous la forme d'un rouleau 10 qui est placé dans un sac 11 (figure 5).

Le rouleau 10 ensaché est alors placé dans un emballage 12 de présentation, de forme prismatique et de préférence parallélépipédique (figure 6).

La longueur de cet emballage 12 correspond à la moitié de la deuxième dimension transversale 3 de la pâte 1, c'est-à-dire au demi-diamètre d'une pâte circulaire, ou à la demi-largeur d'une pâte rectangulaire. L'emballage 12 est ainsi beaucoup plus facile à disposer sur des présentoirs de magasin et dans les réfrigérateurs, et il est bien plus résistant aux contraintes des transports domestiques.

Selon un mode de réalisation particulier, le rouleau de pâte est placé dans un sac transparent et le tout est logé dans un prisme de carton à section triangulaire. En variante, une fois la pâte enroulée sur elle-même, elle peut être placée dans une cartonnette puis dans un sac (figure 7), ou dans une coque de barquette thermoformée (figure 8).

Ainsi le procédé de conditionnement d'une pâte étalée peut comprendre les étapes complémentaires de : placer le rouleau de pâte dans un sac, et placer le rouleau ensaché dans un emballage de présentation.

Selon un autre mode de réalisation, les étapes complémentaires sont : placer le rouleau de pâte dans une cartonnette, et placer la cartonnette contenant le rouleau, dans un sac.

Enfin, selon un autre mode de réalisation, les étapes complémentaires du procédé de conditionnement d'une pâte étalée sont : placer le rouleau de pâte dans une coque de barquette thermoformée, et sceller la barquette.

A titre d'exemple non limitatif, la pâte est une pâte à gâteau, une pâte brisée, une pâte sablée, une pâte feuilletée ou une pâte pour pizza. La feuille d'enrobage est une feuille de papier pour cuisson, de papier recouvert d'un revêtement, ou de papier sulfurisé. Le sac est transparent ou imprimé, imperméable ou non à l'air et à l'humidité, il peut contenir un gaz neutre tel que l'azote ou tout mélange gazeux. L'emballage est en carton imprimé.

## Revendications

1. Procédé de conditionnement d'une pâte étalée, comportant les étapes de :
a) Prendre une pâte (1) étalée présentant une première (2) et une deuxième (3) dimensions médianes,
b) Prendre une feuille rectangulaire (4) d'enrobage, ayant une première dimension (5) correspondant à la première dimension médiane (2) de la pâte (1) étalée, et une deuxième dimension (6) correspondant à une fois et demie la deuxième dimension (3) de la pâte (1) étalée,
c) Placer la pâte (1) étalée sur la feuille rectangulaire (4) en la faisant jouxter trois bords de la feuille (4),
d) Replier sur la pâte (1) étalée le volet (7) libre de la feuille (4) non couvert par la pâte (1), ledit volet (7) libre de la feuille (4) couvrant la moitié de la surface de la pâte (1),
e) Replier la pâte (1) en deux en prenant comme ligne de pliage le bord libre (8) du volet (7),
f) Enrouler la pâte (1) sur elle-même pour constituer un rouleau (10) de longueur sensiblement égale à la moitié de ladite deuxième dimension médiane (3) de la pâte (1) étalée,

2. Procédé de conditionnement selon la revendication 1, **caractérisé en ce qu'**il comporte les étapes complémentaires de :
g) Placer le rouleau (10) dans un sac (11),
h) Placer le rouleau ensaché dans un emballage (12) de présentation.

3. Procédé de conditionnement selon la revendication 1, **caractérisé en ce qu'**il comporte les étapes complémentaires de :
i) Placer le rouleau dans une cartonnette,
j) Placer la cartonnette contenant le rouleau, dans un sac

4. Procédé de conditionnement selon la revendication 1, **caractérisé en ce qu'**il comporte les étapes complémentaires de :
k) Placer le rouleau dans une coque de barquette thermoformée,
l) Sceller la barquette.

5. Procédé de conditionnement selon la revendication 1 **caractérisé en ce que** la pâte (1) étalée est de forme circulaire.

6. Procédé de conditionnement selon la revendication 1 **caractérisé en ce que** la pâte (1) étalée est de forme rectangulaire.

## Patentansprüche

1. Verpackungsverfahren eines ausgerollten Teigs, umfassend die folgenden Schritte:
a) Ergreifen eines ausgerollten Teigs (1), der eine erste (2) und eine zweite (3) mediane Abmessung aufweist,
b) Ergreifen eines rechteckigen Verpackungsbogens (4) mit einer ersten Abmessung (5), die der ersten medianen Abmessung (2) des ausgerollten Teigs (1) entspricht, und mit einer zweiten Abmessung (6), die anderthalbmal der zweiten Abmessung (3) des ausgerollten Teigs (1) entspricht,
c) Platzieren des ausgerollten Teigs (1) auf den rechteckigen Bogen (4), wobei dieser an drei Ränder des Bogens (4) anstößt,
d) Falten des freien, nicht von dem Teig (1) bedeckten Flügels (7) des Bogens (4) über den Teig (1), wobei der freie Flügel (7) des Bogens (4) die Hälfte der Oberfläche des Teigs (1) bedeckt,
e) hälftiges Falten des Teigs (1), wobei der freie Rand (8) des Flügels (7) die Faltlinie ist,
f) Rollen des Teigs (1) um sich selbst, um eine Rolle (10) zu bilden, deren Länge etwa der Hälfte der zweiten medianen Abmessung (3) des ausgerollten Teigs (1) entspricht.

2. Verpackungsverfahren nach Anspruch 1, **dadurch gekennzeichnet, dass** es die folgenden zusätzlichen Schritte umfasst:
g) Platzieren der Rolle (10) in einen Beutel (11),
h) Platzieren der eingetüteten Rolle in eine Präsentationsverpackung (12).

3. Verpackungsverfahren nach Anspruch 1, **dadurch gekennzeichnet, dass** es die folgenden zusätzlichen Schritte umfasst:
i) Platzieren der Rolle in eine Schachtel,
j) Platzieren der die Rolle enthaltenden Schachtel in einen Beutel.

4. Verpackungsverfahren nach Anspruch 1, **dadurch gekennzeichnet, dass** es die folgenden zusätzlichen Schritte umfasst:
k) Platzieren der Rolle in eine warmgeformte Schale,
l) Versiegeln der Schale.

5. Verpackungsverfahren nach Anspruch 1, **dadurch gekennzeichnet, dass** der ausgerollte Teig (1) kreisrund ist.

6. Verpackungsverfahren nach Anspruch 1, **dadurch gekennzeichnet, dass** der ausgerollte Teig (1) rechteckig ist.

## Claims

1. A method for packaging a sheeted dough, including the following steps:
a) Taking a sheeted dough (1) having first (2) and second (3) median dimensions,
b) Taking a rectangular coating sheet (4), having a first dimension (5) corresponding to the first median dimension (2) of the sheeted dough (1), and a second dimension (6) corresponding to one and one half times the second dimension (3) of the sheeted dough (1),
c) Placing the sheeted dough (1) on the rectangular sheet (4) while having it adjoin three edges of the sheet (4),
d) Folding, on the sheeted dough (1), the free flap (7) of the sheet (4) not covered by the dough (1), said free flap (7) of the sheet (4) covering half of the surface of the dough (1),
e) Folding the dough (1) in two, using the free edge (8) of the flap (7) as folding line,
f) Winding the dough (1) around itself to form a roll (10) with a length substantially equal to half of said second median dimension (3) of the sheeted dough (1).

2. The packaging method according to claim 1, **characterized in that** it includes the following additional steps:
g) Placing the roll (10) in a bag (11),
h) Placing the bagged roll in a display packaging (12).

3. The packaging method according to claim 1, **characterized in that** it includes the following additional steps:
i) Placing the roll on a linerboard,
j) Placing the linerboard containing the roll in a bag.

4. The packaging method according to claim 1, **characterized in that** it includes the following additional steps:
k) Placing the roll in a thermoformed tray shell,
l) Sealing the tray.

5. The packaging method according to claim 1, **characterized in that** the sheeted dough (1) is circular.

6. The packaging method according to claim 1, **characterized in that** the sheeted dough (1) is rectangular.
